# EUROPEAN PATENT APPLICATION

(11) **EP 4 174 195 A1**
(43) Date of publication of application: **03.05.2023**
(21) Application number: 21306523.8
(22) Date of filing: 29.10.2021
(51) Int. Cl.: C22B 3/08, C22B 3/00

(54) **RECOVERY OF NICKEL AND/OR COBALT CONTAINED IN AN IRON AND/OR ALUMINUM SOLID RESIDUE**

(71) Applicant: Eramet, 75015 Paris (FR); Eramet Ideas, 78190 Trappes (FR)
(72) Inventor: POMAREDE, Vincent, 98800 NOUMEA (NC)
(74) Representative: Cabinet Beau de Loménie

(57) **Abstract**

The present invention concerns a process for recovering nickel and/or cobalt from an iron and/or aluminum solid residue, said process comprising the following successive steps:
a) Leaching of an iron and/or aluminum solid residue containing Ni and/or Co with an aqueous solution containing sulfuric acid at a final pH ≤ 2, said iron and/or aluminum solid residue containing Ni and/or Co being issued from an iron and/or aluminum removal step by neutralization during a nickel ore treatment process;
b) Selective precipitation of iron and/or aluminum by neutralization of the leachate obtained in step a) at a pH in the range of 3-5 with a neutralizing agent;
c) Solid/liquid separation and washing of the solid obtained in step b);
d) Recovery of the neutralization solution and washing solution obtained in step c) containing nickel and/or cobalt.

It also concerns the use of the process according to the present invention in a nickel ore treatment process.

## Description

The present invention concerns the nickel ore treatment process and in particular a new process for recovering nickel and/or cobalt from an iron and/or aluminum solid residue obtained in said nickel ore treatment process.

During a nickel ore treatment process it is always necessary to eliminate iron and/or aluminum contained therein.

Indeed during the leaching of the nickel ore where value metals such as nickel and cobalt contained in the ore are transferred to a pregnant leach solution, some impurities such as iron, aluminum and chromium are also leached and require to be separated from the value metals.

To do so, one or several neutralization steps of the leachate are carried out in which iron and/or aluminum is precipitated in form of a solid. However during the neutralization, depending of the pH, a little or a lot of nickel and/or cobalt are also precipitated and therefore the iron and/or aluminum solid residue contains also such value metals which generates losses of value metal by coprecipitation.

The article of Ross Grassi, David White & Tim Kindred presented at the ALTA 2000 conference, NICKEL/COBALT-6 in Perth, Australia on May 15-18, 2000 (Cawse nickel operations - process description and production ramp-up) describes the Cawse project which started in 1998 to process laterite nickel by High Pressure Acid Leaching (HPAL). The flowsheet was based on a pressurized leaching in sulfuric acid, where value metals such as nickel and cobalt contained in the ore are transferred to a pregnant leach solution. Some impurities such as iron, aluminum and chromium are also leached and require to be separated from the value metals. In the flowsheet, the leached slurry is neutralized to pH 3.0-3.5. The majority of ferric iron is precipitated during this stage. After removal of the solid residue by Counter-Current Decantation (CCD), a further iron removal stage allows ferrous iron oxidation with air and precipitation of ferric iron at a greater pH of 5.0. Precipitated solids are separated and recycled upstream for redissolution of value metals in contact of the HPAL discharge residual acidity. However this process has several drawbacks:
- Iron precipitation before the CCD circuit may cause some nickel coprecipitation by sorption that is not recovered afterwards. The presence of iron hydroxides in the CCD solids may also affect the solid residue settling performance and decrease CCD washing efficiency, which eventually decreases the plant nickel recovery.
- Most of the aluminum is precipitated in the iron removal stage after CCD. The precipitated aluminum is recycled upstream in the autoclave discharge where it is redissolved. As only a fraction of the aluminum is precipitated in the neutralization stage before CCD, the majority of the aluminum is sent back to the iron removal stage after CCD. An aluminum accumulation loop is built up between the two neutralization stages leading to process instability.
- To bleed aluminum and avoid the accumulation loop, the pH of the neutralization stage before CCD needs to be increased to greater value, which increases the risk of nickel coprecipitation and nickel losses.
- In addition, the nickel precipitated in the iron removal stage after CCD is recycled before the CCD. This may increase the plant overall nickel losses:
   i) The recycled precipitated nickel can be incompletely leached.
   ii) A small fraction of the dissolved recycle nickel is lost in CCD (around 0.5 %) due to the CCD washing efficiency.

In Inco Goro Nickel project, as described in the article of Mihaylov et al. (Hydrometallurgy, CIM Bulletin, Vol 93, N°1041, June 2000, pages 124-130), both HPAL discharge residual acid neutralization and iron removal stages are found after the residue washing step in CCD, which is directly after leaching (in comparison to Cawse where a first neutralization step is carried out before CCD). The first neutralization stage is carried out with limestone at pH 3.5-4.0, and solids precipitated are separated, filtered, washed and considered as waste. The recovered liquid is then further neutralized with lime at higher pH and ferrous iron is oxidized with air. The precipitated solids are recycled in front of the first neutralization stage, after CCD.

However the drawbacks encountered when the first neutralization is before CCD and the second neutralization is after CCD (Cawse process) may be encountered when both neutralization stages are after CCD:
- A low pH in the first neutralization stage leads to an aluminum accumulation loop between the two neutralization stages,
- A high pH in the first neutralization stage leads to nickel losses by coprecipitation.

In 1956, Freeport Sulphur (FR1172673) discloses a single neutralization of Ni Pregnant Leach Solution (PLS) at pH= 3.5-4.5 with a possible treatment of the iron/aluminum precipitate using slightly acidic water streams recycled from the process. These washes allow partial dissolution of nickel and cobalt precipitated during the iron/aluminum removal stages. The leachate produced is further recycled in the ore preparation circuit upstream of the HPAL section.

Guanxi Metallurgical Research Institute (CN101525690) also mentions the residue partial dissolution by addition of sulfuric acid on the residue after neutralization with magnesite up to pH 2.5.

The reason of this partial redissolution is not described. The acid wash of the solids precipitated during neutralization stages allows partial or complete redissolution of nickel and cobalt, however selectivity towards impurities is not sufficient. This implicates that in order to recover a large fraction of the precipitated nickel and cobalt, it is necessary to redissolve simultaneously significant amounts of iron and aluminum with the associated risks of accumulation loops in the process.

In addition, the liquor containing the dissolved nickel and cobalt also contains calcium sulfate up to its solubility concentration. As calcium sulfate is insoluble in the HPAL conditions, calcium will precipitate as anhydrite calcium sulfate (CaSO₄) during the heat-up sequence, leading to critical scaling in the heaters before HPAL.

Finally JP2013253273 describes a process in which after neutralization of a nickel sulfate solution with compressed air in order to oxidize and precipitate iron, the obtained slurry residue is releached in water or nickel sulfate solution while adding sulfuric at 200-400 g/L, with a target at pH=3.8-4.2, during 70-110 min in order to redissolve the nickel hydroxides.

Dedicated releaching of iron residue in parallel of the main process line allows minimizing the risk of accumulating iron and aluminum in the process. Partial redissolution allows partial redissolution of nickel and cobalt, therefore decreasing the losses.

However, this process is limited in the possible recovery of precipitated nickel and cobalt due to the limited final pH target. Indeed, the final pH target of 3.8-4.2 only allows a partial dissolution of the nickel and cobalt present in the iron residue, which restricts the potential nickel and cobalt recovery of the system. Decreasing the final pH would allow increasing nickel and cobalt redissolution and recovery, however it would also increase iron and aluminum redissolution, thus increasing the risks of building up an accumulation loop when reintegrating the flux in the main process line, and this patent application describes a strong limitation in the filterability of the residue after releach at pH lower than 3.8.

There is therefore a need to find a way to minimize the nickel and/or cobalt losses while at the same time eliminating iron and/or aluminum from the nickel ore treatment process.

The inventors have surprisingly found that the nickel and/or cobalt coprecipitated with iron and/or aluminum during the neutralization stages can be recovered by successive dissolution and selective reprecipitation. Therefore the iron/aluminum residues are not recycled far upstream in the process, for instance before CCD. There are thus no additional losses due to recirculating nickel in CCD. Moreover due to the very low iron/aluminum precipitates recycled upstream in the process, there are no accumulation loops between neutralization stages. No recirculation upstream of the autoclave avoids issues with gypsum solubility in the pressure leaching conditions.

The present invention thus concerns a process for recovering nickel and/or cobalt from an iron and/or aluminum solid residue, said process comprising the following successive steps:
a) Leaching of an iron and/or aluminum solid residue containing Ni and/or Co with an aqueous solution containing sulfuric acid at a final pH ≤ 2, said iron and/or aluminum solid residue containing Ni and/or Co being issued from an iron and/or aluminum removal step by neutralization during a nickel ore treatment process;
b) Selective precipitation of iron and/or aluminum by neutralization of the leachate obtained in step a) at a pH in the range of 3-5 with a neutralizing agent;
c) Solid/liquid separation and washing of the solid obtained in step b);
d) Recovery of the neutralization solution and washing solution obtained in step c) containing nickel and/or cobalt

Step a) of the process according to the invention therefore consists in the leaching of an iron and/or aluminum solid residue containing Ni and/or Co with an aqueous solution containing sulfuric acid at a final pH ≤ 2, advantageously at a final pH in the range of 1-2, said iron and/or aluminum solid residue containing Ni and/or Co being issued from an iron and/or aluminum removal step by neutralization during a nickel ore treatment process.

The aim of this step is to quantitatively dissolve Ni and/or Co, advantageously Ni and Co, present in the iron and/or aluminum solid residue, advantageously the iron and aluminum solid residue. This also leads to the dissolution of Fe and/or Al contained in the solid residue. Advantageously step a) is carried out at an initial solid content of 20-40% by weight based on the total weight of the solid residue and leaching solution. More advantageously the process according to the invention is a continuous process and step a) is carried out at solid content maintained in the range of 20-40% by weight based on the total weight of the solid residue and leaching solution.

It is in general carried out in an agitated tank.

The residence time of step a) can be between 30 min to 2 hours Advantageously it is one hour.

Advantageously step a) is carried out under heating, more advantageously at a temperature in the range of 30-100°C, advantageously in the range 50-90°C. More advantageously step a) is carried out at atmospheric pressure.

Step a) can be carried out in a single step or can be carried by several successive steps, for example two successive steps.

Step b) of the process according to the invention consists in the selective precipitation of iron and/or aluminum by neutralization of the leachate obtained in step a) at a pH in the range of 3-5, advantageously in the range of 3-4, with a neutralizing agent.

The aim is to reprecipitate Fe and/or Al impurities to bleed them from the process. Unexpectedly, nickel and cobalt are not reprecipitated to the same extent than in the previous Fe/AI neutralization stage of the nickel ore treatment process, although pH are close. Therefore the solid obtained in step b) contains Fe and/or Al which were precipitated selectively from Ni and/or Co.

Advantageously the neutralizing agent is selected in the group consisting of magnesia, limestone and lime, more advantageously in the group consisting of limestone and lime (in particular lime milk). Still more advantageously it is limestone, in particular a slurry of limestone in water (also named pulp of limestone). The slurry of limestone in water can contain 10 to 30% w/w of limestone, more advantageously 15 to 25% w/w of limestone.

It is in general carried out in an agitated tank.

The residence time of step b) can be between 1 and 4 hours, advantageously between 2 and 3 hours, more advantageously it is three hours.

Advantageously step b) is carried out under heating, more advantageously at a temperature in the range of 30-100°C, even still more advantageously at a temperature in the range of 50-90°C. More advantageously step b) is carried out at atmospheric pressure.

Step b) can be carried out in a single step or can be carried by several successive steps, for example three successive steps.

In an advantageous embodiment, the process according to the present invention comprises an intermediate step a1) between step a) and b), said step a1) consisting in a solid/liquid separation step. The solid thus obtained will be discarded and step b) will be carried out on the leachate (or liquid pregnant solution) thus obtained.

In a particular embodiment, the process according to the present invention does not contain the intermediate step a1). In this case step b) is carried out on the leachate of step a) even if such leachate also contains some solid.

Step c) of the process according to the invention consists in a solid/liquid separation, preferably a decantation or a filtration, in particular a filtration, and washing of the solid obtained in step b). The aim is to recover as much soluble nickel and/or cobalt as possible.

The washing can be carried out by any available water, in particular having a neutral pH, in order to avoid any redissolution of the solid in the washing solution. It can be raw or process water.

Step d) of the process according to the invention consists in the recovery of the neutralization solution (or filtrate or overflow) and washing solution (or interstitial solution) obtained in step c) containing nickel and/or cobalt. Indeed said solutions contain the value metals Ni and/or Co, whereas the washed solid containing Fe and/or Al is discarded as waste, allowing bleeding Fe and/or Al from the process.

In an advantageous embodiment, the process according to the present invention comprises a further step e) of recycling the solutions (filtrate or overflow and/or washing solutions) containing nickel and/or cobalt obtained in step d) in the nickel ore treatment process, minimizing any nickel and/or cobalt loss from the nickel ore treatment process. Indeed most of the nickel and/or cobalt coprecipitated with Fe and/or Al during the iron and/or aluminum removal step can be recovered.

In the process according to the present invention, the iron and/or aluminum solid residue containing Ni and/or Co of step a) can be an iron residue containing Ni, an iron residue containing Co, an iron residue containing both Co and Ni, an aluminum residue containing Ni, an aluminum residue containing Co, an aluminum residue containing both Ni and Co, an iron and aluminum residue containing Ni, an iron and aluminum residue containing Co, an iron and aluminum residue containing both Ni and Co.

The iron and/or aluminum of the iron and/or aluminum solid residue can be in the form of iron hydroxide and/or aluminum hydroxide.

The Ni and/or Co of the iron and/or aluminum solid residue can be in the form of nickel hydroxide and/or cobalt hydroxide.

In an advantageous embodiment the iron and/or aluminum solid residue of step a) contains Ni and Co (advantageously in the form of hydroxide). Therefore the solutions obtained in step d) of the process according to the invention that could be recycled in step e) contain both Ni and Co which are value metals.

More particularly the solid residue of step a) is an iron and aluminum solid residue (it contains both Fe and Al, advantageously in the form of hydroxide). Therefore Fe and Al are both selectively precipitated in step b) of the process according to the invention and the solid thus obtained containing both Fe and Al can be discarded as waste after step c).

In another advantageous embodiment the iron and/or aluminum solid residue of step a) of the process according to the invention also contains chromium and step b) of the process according to the invention consists in the selective precipitation of chromium together with iron and/or aluminum. Therefore the solid thus obtained in step b) containing Cr and Fe and/or Al can be discarded as waste after step c).

In a particularly advantageous embodiment, the iron and/or aluminum solid residue of step a) of the process according to the invention also contains calcium sulfate hydrate such as gypsum. More particularly the main component of the iron and/or aluminum solid residue of step a) (more than 50% by weight) consists in calcium sulfate hydrate such as gypsum. In particular the calcium sulfate hydrate is not completely leached in step a) (and can remain in solid form at the end of step a)) and will in any case precipitate in step b) of the process according to the present invention.

This is therefore even more surprising that Co and Ni remain in solution at the end of step b) since it is known by the one skilled in the art that Co and Ni have a tendency to sorption on calcium sulfate hydrate solids.

In another advantageous embodiment, the iron and/or aluminum solid residue of step a) of the process according to the invention also contains Si.

The iron and/or aluminum solid residue containing Ni and/or Co of step a) of the process according to the invention is issued from an iron and/or aluminum removal step by neutralization during a nickel ore treatment process. It is therefore a neutralized iron and/or aluminum solid residue. Indeed during the nickel ore treatment process, there is in general an acid leaching step of the nickel ore followed by an iron and/or aluminum removal step by neutralization of the leachate in order to obtain an iron and/or aluminum solid residue.

Indeed during the acid leaching step of the nickel ore during the nickel ore treatment process, the iron and/or aluminum impurities contained in the nickel ore are solubilized in the acid leachate together with the nickel and/or cobalt value metals.

Therefore it is necessary to remove these impurities (Fe and/or Al) from the leachate by neutralization thus obtaining an iron and/or aluminum solid residue. However, during this neutralization step, some of the nickel and/or cobalt are coprecipitated with these impurities thus obtaining an iron and/or aluminum solid residue containing Ni and/or Co. It is this solid residue which is used in step a) of the process according to the invention.

In an advantageous embodiment the nickel ore is an oxidized nickel ore, more advantageously a laterite nickel ore, in particular of the limonite or saprolite type, still more advantageously of the limonite type. More particularly the nickel ore is an Indonesian laterite ore.

In an advantageous embodiment the process according to the present invention comprises a preliminary step alpha), before step a), of an iron and/or aluminum removal step by neutralization at a pH in the range of 2-6.5, advantageously in the range of 4-5.5, of a leachate obtained from a nickel ore leaching, in order to obtain the iron and/or aluminum solid residue containing Ni and/or Co.

Step alpha) can consist in a single neutralization step or in a multistage neutralization (for example at least two successive neutralization steps).

In particular, when step alpha) consists in a single neutralization step, this neutralization step can be carried out at a pH in the range of 5-6.5, advantageously at a pH in the range of 5-5.5.

In another embodiment, when step alpha) consists in a multistage neutralization, advantageously a neutralization in two successive steps, the iron and/or aluminum solid residue containing Ni and/or Co of step a) can be obtained after the first neutralization step and/or at the end of the multistep neutralization. Each of the neutralization steps can be carried out at slightly different pH. For example the first neutralization step is carried out at a pH in the range of 3-5 and the second neutralization step is carried out at a pH in the range of 5-6.5, advantageously at a pH in the range of 5-5.5. The iron and/or aluminum solid residue obtained after each neutralization step does not contain the same amount of Ni and/or Co. This amount is higher in the residue obtained after the second or subsequent neutralization step than after the first one.

However each of the residue (whatever the amount of Ni and/or Co contained therein) alone or combined together can be used in step a) of the process according to the invention.

In another embodiment, the process according to the present invention contains an intermediate step alpha1) between step alpha) and step a), said intermediate step alpha1) consisting in a solid/liquid separation, advantageously decantation or filtration, more advantageously decantation, optionally followed by the washing of the solid obtained and/or by the repulping of the washed solid, step a) is performed on the solid obtained in step alpha1) either as such, washed or repulped in water. In another embodiment step alpha1) is not present and step a) is carried out directly on the mixture of solid/liquid obtained in step alpha). Advantageously, the process according to the present invention is a continuous process.

The present invention also concerns the use of the process according to the invention in a nickel ore treatment process.

It finally concerns a nickel ore treatment process containing the following successive steps:
- A) acid leaching of the nickel ore
- B) iron and/or aluminum removal step by neutralization of the acid leachate
- B1) optional step of solid/liquid separation
- C) carrying out steps a), b), c) and d) and optionally steps a1) and/or e) of the process according to the present invention on the solid residue obtained in step B) or in the optional step B1);
- D) recovery of the Ni and/or Co.

Steps A) and B) can be carried out by method well known by the one skilled in the art and as described in the cited prior art such as in the article of Ross Grassi, David White & Tim Kindred presented at the ALTA 2000 conference, the article of Mihaylov et al. (Hydrometallurgy, CIM Bulletin, Vol 93, N°1041, June 2000, pages 124-130), or FR1172673. Step A) can for example be carried out with sulfuric acid. It can be a High Pressure Acid Leaching (HPAL).

Step B) can be carried out as indicated above for step alpha).

An intermediate step of A1) of Counter-Current Decantation (CCD) can be carried out between step A) and B) in order to remove any solid which has not been leached.

Step B1) can be carried out as indicated above for step alpha1).

The present invention will be better understood by reference to the description of the examples below.

### Example 1: Laboratory batch tests with limestone

250 ml of a slurry from the iron/aluminum neutralization step thickener underflow (U/F) (produced during pilot scale operation of an Indonesian laterite ore) was agitated and heated at 60°C. The initial slurry had a solid content of 36%w/w, and a density of 1.32. The composition (w/w) of the solid residue and of the liquid from the slurry (in g/l) is as indicated in tables 1 and 2 below:

**Table 1: Composition of the solid residue**

| Element | Ni | Co | Fe | Al | Cr | Si | Ca | S |
|---|---|---|---|---|---|---|---|---|
| content (w/w) | 0.54 | 122 ppm | 2.22 | 4.06 | 0.31 | 1.1 | 17.13 | 14.89 |

**Table 2: Composition of the liquid**

| Element | Ni | Co | Fe | Al | Cr | Mg | Mn | S |
|---|---|---|---|---|---|---|---|---|
| content (g/l) | 0.97 | 0.11 | 0.00021 | 0.057 | 0.0037 | 14.43 | 0.63 | 19.73 |

Sulfuric acid diluted with water at 150 g/l was slowly added over 1 hour to obtain pH=1. At this pH almost all nickel, cobalt, iron, aluminum and chromium were dissolved. The composition of the leachate at pH 1 in g/l and of the remaining solid in w/w is indicated in tables 3 and 4 below.

The solid content of the leach slurry is 8.3%.

**Table 3: Composition of the leachate**

| Element | Ni | Co | Fe | Al | Cr | Mg | Mn | S |
|---|---|---|---|---|---|---|---|---|
| content (g/l) | 1.82 | 0.082 | 7.41 | 11.64 | 0.834 | 7.02 | 0.51 | 46.48 |

**Table 4: Composition of the solid**

| Element | Ni | Co | Fe | Al | Cr | Si | Ca | S |
|---|---|---|---|---|---|---|---|---|
| content (w/w) | 0.012 | 0.0008 | 0.21 | 0.22 | 0.004 | 1.68 | 24.75 | 17.36 |

Therefore the dissolution yield (calculated according to the following formula : 1-(wt% element in the residual solid ^{∗} dry weight of the residual solid)/(wt% element in the initial solid ^{∗} dry weight of the initial solid)) is indicated in table 5 below:

**Table 5: Dissolution yield**

| Element | Ni | Co | Fe | Al | Cr | Si | Ca | S |
|---|---|---|---|---|---|---|---|---|
| Dissolution yield (%) | 99.6 | 99.9 | 98.1 | 98.9 | 99.7 | 69.5 | 71.1 | 76.7 |

Then, some pulp of limestone (20% w/w) was slowly introduced in order to get pH=3.5 after 2 hours at a temperature of 60°C. In these conditions 99.9% Fe, 91.7% Al and 93% Cr present in the liquid after dissolution were precipitated, the precipitation yield being calculated based on the following formula: 1 - (concentration in final filtrate x volume of filtrate) / (concentration in liquid after dissolution x volume of liquid after dissolution).

In these conditions, the efficiency of the overall treatment of the invention, calculated from the elements contained in the initial residue before step a) (acid dissolution + precipitation, calculated for Al and Cr by the following formula : leaching recovery x precipitation yield and for Ni and Co by the following formula : 1 - (concentration in final solid x mass of final solid) / (concentration in initial solid residue x mass of initial solid residue) was of 91% Al and 92.7% Cr removed with a loss of only 2.0% Ni and 2.3% Co.

### Example 2: Laboratory batch tests with lime

The leachate obtained in the conditions presented in example 1 was neutralized with lime milk (20%w/w) slowly introduced in order to get pH 3.5 after 2 hours at a temperature of 60°C. 14.9% Ni and 7.8% Co were precipitated whereas 99.9% Fe, 93.2% Al and 95% Cr present in the liquid after dissolution were precipitated.

The use of lime instead of limestone is believed to have generated higher local pH thus higher local precipitation of nickel and cobalt. A mild base such as limestone should be preferred.

### Example 3: Pilot scale continuous operation with various intermediary acidity

An hydrometallurgical process pilot operation for treating Indonesian laterite ore was carried out in which iron/aluminum removal was carried out by neutralization with limestone at pH 4.5 or 4.7 over three periods of 7 to 13 days. Nickel and cobalt losses in the precipitated solids were between 4.8% and 13% for nickel and between 3.0% and 11% for cobalt. The precipitated solid in form of a slurry having solid content of 25-40 % w/w was releached for 1 hour at a temperature of 80-90°C (step a) of the process according to the invention) in 55%w/w sulfuric acid with a different acidity for each period, between 5 and 30 g/l H₂SO₄ of free acidity (pH<1). The leached slurry was then neutralized up to pH 3.4 for 3 hours at a temperature of 70-80°C with limestone slurry in water at 20%w/w (step b) of the process according to the present invention).

The average composition (w/w) of the solid residue obtained after each of the three periods and of the liquid from the slurry (in g/l) is as indicated in tables 6 and 7 below. The leaching recovery is as indicated in table 8 for each period.

**Table 6: Iron/Aluminum residue composition in w/w (average three periods)**

| Element | Ni | Co | Fe | Al | Cr | S | Ca | Mg | Mn | Si |
|---|---|---|---|---|---|---|---|---|---|---|
| content (w/w) | 1.3 | 0.05 | 2.9 | 4.4 | 0.5 | 17.0 | 19.2 | 0.08 | 0.04 | 1.9 |

**Table 7: Dissolution yield:**

| | H₂SO₄ (g/L) | Ni | Co | Fe | Al | Cr |
|---|---|---|---|---|---|---|
| Period 1 | 31.5 | 99.3% | 98.2% | 90.2% | 95.9% | 98.8% |
| Period 2 | 16 | 98.5% | 96.3% | 87.7% | 95.7% | 97.4% |
| Period 3 | 5 | 98.1% | 97.8% | 58.6% | 88.8% | 89.3% |

The global precipitation is indicated in table 8 below.

**Table 8: Metal reporting to solid after precipitation in comparison to the feed (liquid + solid):**

| | Global precipitation (%) | | | | |
|---|---|---|---|---|---|
| | Ni | Co | Fe | Al | Cr |
| Period 1 | 2.18 | 2.05 | 97.14 | 92.80 | 95.75 |
| Period 2 | 3.05 | 2.87 | 96.76 | 96.60 | 98.35 |
| Period 3 | 3.09 | 2.31 | 97.45 | 94.65 | 96.80 |

The global recovery (calculated according to the following formula: 1-global precipitation) of the nickel and cobalt from initial iron/aluminum removal solid residue is indicated in table 9 below. Cobalt recoveries are underestimated due to the fact that the cobalt content in the final residue is under quantification limit.

**Table 9:**

| Period | Ni recovery (%) | Co recovery (%) |
|---|---|---|
| 1 | 97.8 | 98.0 |
| 2 | 95.9 | 96.2 |
| 3 | 96.7 | 97.5 |

During the period with the leaching operated at 31.5g/l free acid, 97.8% of the Ni contained in the solid in the initial iron/aluminum feed was recovered in average and 98% of the Co.

## Claims

1. A process for recovering nickel and/or cobalt from an iron and/or aluminum solid residue, said process comprising the following successive steps:
a) Leaching of an iron and/or aluminum solid residue containing Ni and/or Co with an aqueous solution containing sulfuric acid at a final pH ≤ 2, said iron and/or aluminum solid residue containing Ni and/or Co being issued from an iron and/or aluminum removal step by neutralization during a nickel ore treatment process;
b) Selective precipitation of iron and/or aluminum by neutralization of the leachate obtained in step a) at a pH in the range of 3-5 with a neutralizing agent;
c) Solid/liquid separation and washing of the solid obtained in step b);
d) Recovery of the neutralization solution and washing solution obtained in step c) containing nickel and/or cobalt.

2. The process according to claim 1, wherein the iron and/or aluminum solid residue of step a) also contains chromium and step b) consists in the selective precipitation of chromium together with iron and/or aluminum.

3. The process according to any of claims 1 or 2, wherein step a) is carried out at an initial solid content of 20-40% by weight based on the total weight of the solid residue and leaching solution.

4. The process according to any one of claim 1 to 3, wherein step b) is carried out with limestone as the neutralizing agent, in particular a slurry of limestone in water.

5. The process according to any one of claim 1 to 4, wherein the pH of step b) is in the range of 3-4.

6. The process according to any one of claims 1 to 5, which comprises a further step e) of recycling of the solutions containing nickel and/or cobalt obtained in step d) in the nickel ore treatment process.

7. The process according to any one of claims 1 to 6, wherein the iron and/or aluminum solid residue contains Ni and Co.

8. The process according to any one of claims 1 to 7, wherein the solid residue of step a) is an iron and aluminum solid residue.

9. The process according to any one of claims 1 to 8, wherein the nickel ore is a laterite nickel ore.

10. The process according to any one of claims 1 to 9, which comprises a preliminary step alpha), before step a), of an iron and/or aluminum removal step by neutralization at a pH in the range of 2-6.5, advantageously in the range of 4-5.5, of a leachate obtained from a nickel ore leaching, in order to obtain the iron and/or aluminum solid residue containing Ni and/or Co.

11. The process according to claim 10, wherein step alpha) consists in a single neutralization step or in a multistage neutralization.

12. The process according to claim 11, wherein step alpha) consists in a single neutralization step carried out at a pH in the range of 5-6.5.

13. The process according to claim 11, wherein step alpha) consists in a multistage neutralization, advantageously a neutralization in two steps, the iron and/or aluminum solid residue containing Ni and/or Co of step a) being obtained after the first neutralization step and/or at the end of the multistep neutralization.

14. Use of the process according to any one of claims 1 to 13 in a nickel ore treatment process.
